# EUROPEAN PATENT SPECIFICATION

(11) **EP 1 276 957 B1**
(45) Date of publication and mention of the grant of the patent: **21.12.2005**
(21) Application number: 01933881.3
(22) Date of filing: 24.04.2001
(51) Int. Cl.: E21B 36/04

(54) **ELECTRICAL WELL HEATING SYSTEM AND METHOD**
ELEKTRISCHE BOHRLOCHHEIZVORRICHTUNG UND VERFAHREN
SYSTEME DE CHAUFFAGE ELECTRIQUE POUR PUITS ET PROCEDE CORRESPONDANT

(30) Priority: 24.04.2000 US 199214 P
(43) Date of publication of application: 22.01.2003
(73) Proprietor: SHELL INTERNATIONALE RESEARCH MAATSCHAPPIJ B.V., 2596 HR Den Haag (NL)
(72) Inventor: DE ROUFFIGNAC, Eric, Houston, TX 77005 (US); VINEGAR, Harold, J., Houston, TX 77096 (US); KARANIKAS, John Michael, Houston, TX 77027 (US); KEEDY, Charles, Robert, Houston, TX 77084 (US); WELLINGTON, Scott Lee, Bellaire, TX 77401 (US)
(86) International application number: PCT/EP2001/004657
(87) International publication number: WO 2001/083940

(56) References cited:
- US-A- 2 703 621
- US-A- 2 914 309
- US-A- 4 704 514
- US-A- 5 060 287

## Description

### Background of the Invention

The invention relates to a method and system for heating a hydrocarbon containing formation, such as a coal layer or an oil shale deposit, surrounding a heat injection well.

Application of heat to oil shale formations is described in U.S. Patent Nos. 2,923,535 to Ljungstrom and 4,886,118 to Van Meurs et al. These prior art references disclose that electrical heaters transmit heat into an oil shale formation to pyrolyze kerogen within the oil shale formation. The heat may also fracture the formation to increase permeability of the formation. The increased permeability may allow formation fluid to travel to a production well where the fluid is removed from the oil shale formation. In some processes disclosed by Ljungstrom, for example, an oxygen containing gaseous medium is introduced to a permeable stratum, preferably while still hot from a preheating step, to initiate combustion.

U.S. Patent No. 2,548,360 describes an electrical heating element placed within a viscous oil within a wellbore. The heater element heats and thins the oil to allow the oil to be pumped from the wellbore. U.S. Patent No. 4,716,960 describes electrically heating tubing of a petroleum well by passing a relatively low voltage current through the tubing to prevent formation of solids. U.S. Patent No. 5,065,818 to Van Egmond describes an electrical heating element that is cemented into a well borehole without a casing surrounding the heating element.

U.S. Patent No. 6,023,554 to Vinegar et al. describes an electrical heating element that is positioned within a casing. The heating element generates radiant energy that heats the casing. A granular solid fill material may be placed between the casing and the formation. The casing may conductively heat the fill material, which in turn conductively heats the formation.

U.S. Patent No. 4,570,715 to Van Meurs et al. describes an electrical heating element. The heating element has an electrically conductive core, a surrounding layer of insulating material, and a surrounding metallic sheath. The conductive core may have a relatively low resistance at high temperatures. The insulating material may have electrical resistance, compressive strength and heat conductivity properties that are relatively high at high temperatures. The insulating layer may inhibit arcing from the core to the metallic sheath. The metallic sheath may have tensile strength and creep resistance properties that are relatively high at high temperatures.

U.S. Patent No. 5,060,287 to Van Egmond describes an electrical heating element having a copper-nickel alloy core.

The system according to the preamble of claim 1 and the method according to the preamble of claim 7 are known from US patent No. 4,704,514 to Van Egmond et al.

It is an object of the present invention to provide an improved inexpensive downhole heating method and system which can be configured to transmit a controlled amount of heat in a uniform manner into the formation over a long period of time.

### Summary of the Invention

The system according to the invention comprises an electrical conductor configured to be disposed within a heater well traversing the formation to provide radiant heat to at least a portion of the formation during use, wherein the electrical conductor is at least partly surrounded by an electrical insulation layer which comprises an insulating mineral material comprising mineral grain particles and which is disposed in a sheath which comprises a corrosion-resistant material and the electrical conductor is disposed within an at least partly uncased fluid filled section of the heater well, wherein the insulating material further comprises a selected amount of impurities, which impurities comprise grain particles having smaller sizes than the mineral grain particles.

Preferably, the insulating mineral material comprises magnesium oxide and/or other mineral grain particles and impurities having smaller grain sizes than the mineral grain particles, which are disposed in a sheath which comprises a corrosion-resistant material, such as stainless steel. The pore spaces between the mineral grain particles may be filled with an electrical insulation fluid, such as an inert gas.

The electrical conductor suitably comprises a copper-nickel alloy and is configured as a substantially flexible cable. A support member may support the mineral insulated electrical conductor. A series of centralizers may support and centralize the mineral insulated electrical conductor on the support member.

The mineral insulated electrical conductor is preferably configured such that during use between 0.6 and 3 KW radiant heat per meter length of the mineral insulated electrical conductor is irradiated into the formation surrounding the well.

The method according to the invention comprises applying an electrical current to a mineral insulated electrical conductor, which is at least partly surrounded by an electrical insulating layer comprising mineral grain particles, which layer is disposed in a sheath comprising a corrosion resistant material, to provide radiant heat to at least a portion of the formation, wherein the mineral insulated conductor is disposed within an at least partly uncased fluid filled section of a heater well traversing the formation; and allowing the radiant heat to transfer from the mineral insulated conductor to a section of the formation, wherein the insulating material further comprises a selected amount of impurities, which impurities comprise grain particles having smaller sizes than the mineral grain particles.

The method preferably comprises transmitting between 0.6 and 1.5 KW radiant heat per meter length of the mineral insulated conductor into a portion of the hydrocarbon containing formation surrounding the heater well thereby heating at least a portion of the formation surrounding the heater well to substantially pyrolyze hydrocarbons within said portion of the formation surrounding the heater well.

### Description of preferred embodiments

The invention will be described in more detail and by way of example with reference to the accompanying drawings, in which:
Fig. 1 is a schematic three-dimensional view of a mineral insulated conductor according to the present invention;
Fig. 2 depicts a heater well in which an assembly of three mineral insulated conductors are suspended by means of a support member;
Fig. 2A depicts at a larger scale than shown on Fig.2 a detail of the electrical connections at the upper ends of the mineral insulated conductors shown in Fig.2 ; and
Fig. 3 depicts a wellhead of the heater well in which a plurality of mineral insulated conductors are suspended.

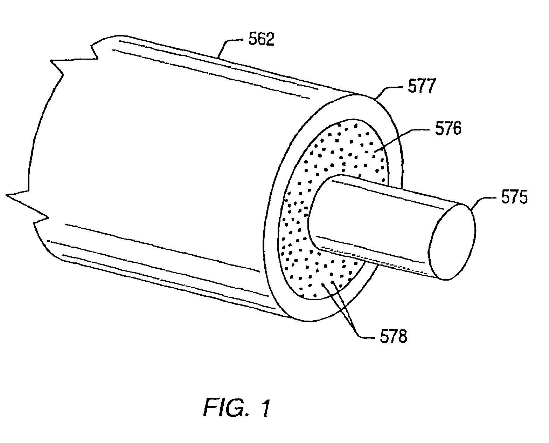

FIG. 1 depicts a perspective view of an end portion of an insulated conductor heater 562. The insulated conductor heater 562 may have any desired cross sectional shape, such as, but not limited to round (as shown in FIG. 1), triangular, ellipsoidal, rectangular, hexagonal or irregular shape. The insulated conductor heater may include an electrical conductor 575, a mineral electrical insulation layer 576 and a surrounding sheath 577. The conductor 575 may resistively heat when an electrical current passes through the conductor. An alternating or direct current may be used to heat the conductor 575. In an embodiment, a 60 cycle AC current may be used.

In some embodiments, the electrical insulation 576 may inhibit current leakage and may inhibit arcing to the sheath 577. The electrical insulation 576 may also thermally conduct heat generated in the conductor 575 to the sheath 577. The sheath 577 may radiate or conduct heat to the formation. An insulated conductor heater 562 may be 1000 m or more in length. In an embodiment of an insulated conductor heater, the insulated conductor heater 562 may have a length from about 15 m to about 950 m. In embodiments of insulated conductor heaters, purchased insulated conductor heaters have lengths of about 100 m to 500 m (e.g., 230 m). Dimensions of sheaths and/or conductors of an insulated conductor may be formed so that the insulated conductors have enough strength to be self-supporting even at upper working temperatures. Such insulated cables may be suspended from wellheads or supports positioned near an interface between an overburden and a hydrocarbon containing formation without the need for support members extending into the hydrocarbon formation along with the insulated conductors.

The mineral insulated electric heater 562 may be configured to heat a portion of the hydrocarbon containing formation to a temperature sufficient to support oxidation of hydrocarbons. The portion may be proximate to or substantially adjacent to a heater well or other opening in the formation. The portion may also radially extend a width of less than approximately 1 m from the opening or heater well. A width of the portion may vary, however, depending on, for example, the electrical power supplied to the heater. An oxidizing fluid may be provided to the opening for oxidation of hydrocarbons. Oxidation of the hydrocarbons may be configured to heat the hydrocarbon containing formation in a process of natural distributed combustion. Electrical current applied to the electric heater may subsequently be reduced or may be turned off. Thus, natural distributed combustion may be configured, in conjunction with an electric heater, to provide a reduced input energy cost method to heat the hydrocarbon containing formation compared to using an electric heater.

The mineral insulated conductor heater 562 shown in Fig. 1 may be a mineral insulated "cable" or rod 575. The electrical insulator 576 may be made of a variety of mineral containing materials. Compacted MgO powder cylinders may be used between the center conductor 575 and the sheat 577. Alternatively the space between the center conductor 575 and the sheath 577 may be filled with MgO powder either manually or using an automatic machine. Low flow characteristics of the compacted powder and other properties of the powder and/or the sheaths and conductors may inhibit the powder from flowing out of the sheaths. Commonly used powders may include, but are not limited to, MgO, Al₂O₃, Zirconia, BeO, different chemical variations of Spinels, and combinations thereof. MgO may provide good thermal conductivity and electrical insulation properties. The desired electrical insulation properties are low leakage current and high dielectric strength. A low leakage current decreases the possibility of thermal breakdown and the high dielectric strength decreases the possibility of arcing across the insulator. Thermal breakdown can occur if the leakage current causes a progressive rise in the temperature of the insulator leading also to arcing across the insulator. An amount of impurities 578 in the electrical insulator powder may be tailored to provide required dielectric strength and a low level of leakage current. The impurities 578 added may be, but are not limited to, CaO, Fe₂O₃, Al₂O₃, and other metal oxides. Low porosity of the electrical insulation tends to reduce leakage current and increase dielectric strength. Low porosity may be achieved by increased packing of the MgO powder during fabrication or by filling of the pore space in the MgO powder with other granular materials, for example, Al₂O₃.

The impurities 578 added to the electrical insulator powder may have particle sizes that are smaller than the particle sizes of the powdered electrical insulator. The small particles may occupy pore space between the larger particles of the electrical insulator so that the porosity of the electrical insulator is reduced. Examples of powdered electrical insulators that may be used to form electrical insulation 576 are "H" mix manufactured by Idaho Laboratories Corporation (Idaho Falls, Idaho), or Standard MgO used by Pyrotenax Cable Company (Trenton, Ontario) for high temperature applications. In addition, other powdered electrical insulators may be used.

The sheath 577 of the insulated conductor heater 562 may be an outer metallic layer. The sheath 577 may be in contact with hot formation fluids. The sheath 577 may need to be made of a material having a high resistance to corrosion at elevated temperatures. Alloys that may be used in a desired operating temperature range of the sheath include, but are not limited to, 304 stainless steel, 310 stainless steel, Incoloy 800, and Inconel 600. The thickness of the sheath has to be sufficient to last for three to ten years in a hot and corrosive environment. A thickness of the sheath may generally vary between about 1 mm and about 2.5 mm. For example, a 1.3 mm thick 310 stainless steel outer layer provides a sheath 577 that is able to provide good chemical resistance to sulfidation corrosion in a heated zone of a formation for a period of over 3 years.

The insulated conductor heater may be tested after fabrication. The insulated conductor heater may be required to withstand 2-3 times an operating voltage at a selected operating temperature. Also, selected samples of produced insulated conductor heaters may be required to withstand 1000 VAC at 760 °C for one month.

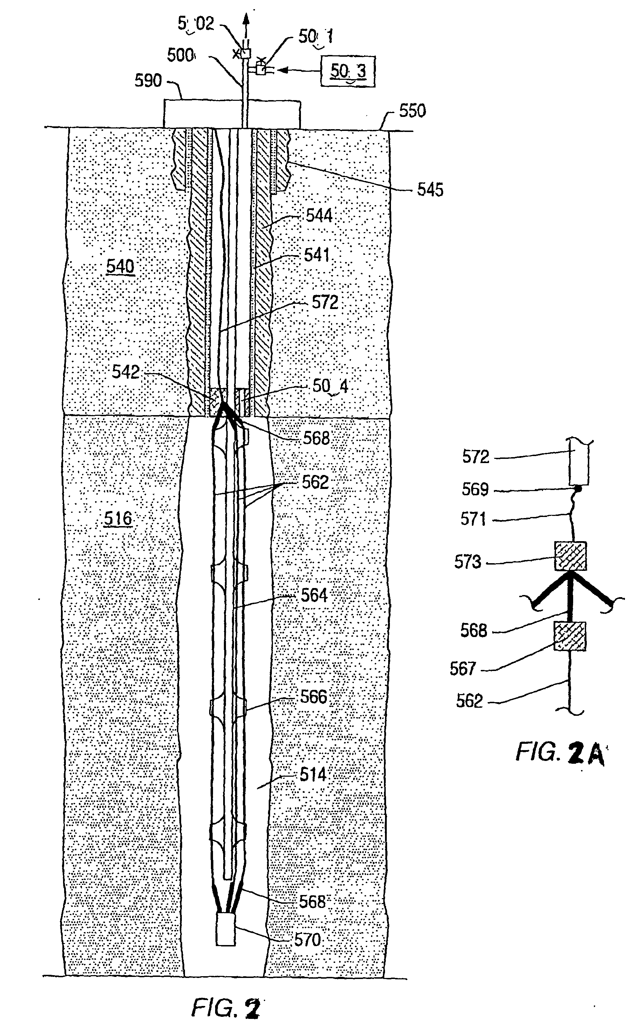

A plurality of insulated conductor heaters 562 may be placed in a heater well or other opening in a hydrocarbon containing formation 516 as shown in Fig.2. The insulated conductor heaters 562 may be placed in an uncased opening in the hydrocarbon containing formation. Placing the heaters 562 in an uncased opening in the hydrocarbon containing formation 516 may allow heat transfer from the heater to the formation by radiation, as well as, conduction. In addition, using an uncased opening may also allow retrieval of the heater from the well, if necessary, and may eliminate the cost of the casing. Alternately, the insulated conductor heaters may be placed within a casing in the formation; may be cemented within the formation; or may be packed in an opening with sand, gravel, or other fill material. The insulated conductor heater or heaters may be supported on a support member positioned within the opening. The support member may be a cable, rod, or a conduit (e.g., a pipe). The support member may be made of a metal, ceramic, inorganic material, or combinations thereof. Portions of a support member may be exposed to formation fluids and heat during use, so the support member is in many instances both chemically resistant and thermally resistant.

Ties, spot welds and/or other types of connectors may be used to couple the insulated conductor heater to the support member at various locations along a length of the insulated conductor heater. The support member may be attached to a wellhead at an upper surface of the formation. In an alternate embodiment of an insulated conductor heater, the insulated conductor heater is designed to have sufficient structural strength so that a support member is not needed. The insulated conductor heater will in many instances have some flexibility while still being sufficiently strong to inhibit thermal expansion damage when heated or cooled.

Another embodiment of an insulated conductor heater is to place the insulated conductor heater in a well without support and without centralizers. This can be accomplished for heaters using a suitable combination of temperature, length, and metallurgy. In some embodiments, an insulated conductor heater may be unsupported. In alternate embodiments, an insulated conductor heater may be supported. The values at which support may be needed for the insulated conductor heater may depend on, for example, the temperature and metallurgy of the heater. For example, at 650 °C a 310 stainless steel insulated conductor heater less than 150 meters may be unsupported and longer than 180 meters may be supported.

The mineral insulated electric heater or assembly of heaters according to the invention may be configured to heat a portion of the hydrocarbon containing formation to a temperature sufficient to support oxidation of hydrocarbons. The portion may be proximate to or substantially adjacent to a heater well or other opening in the formation. The portion may also radially extend a width of less than approximately 1 m from the opening or heater well. A width of the portion may vary, however, depending on, for example, a power supplied to the heater. An oxidizing fluid may be provided to the opening for oxidation of hydrocarbons. Oxidation of the hydrocarbons may be configured to heat the hydrocarbon containing formation in a process of natural distributed combustion. Electrical current applied to the electric heater may subsequently be reduced or may be turned off. Thus, natural distributed combustion where an oxidant is injected into the heater well to combust hydrocarbons in the formation 516 adjacent to the periphery of the heater well 514 may be configured, in conjunction with an electric heater, to provide a reduced input energy cost method to heat the hydrocarbon containing formation compared to using an electric heater.

As illustrated in FIG. 2, an insulated conductor heater 562 will in many instances be designed to operate at a power level of up to about 1650 watts/meter. The insulated conductor heater 562 may typically operate at a power level between about 500 watts/meter and about 1150 watts/meter when heating a formation. The insulated conductor heater 562 may be designed so that a maximum voltage level at a typical operating temperature does not cause substantial thermal and/or electrical breakdown of electrical insulation 576. The insulated conductor heater 562 may in some embodiments also be designed so the sheath 577 does not exceed a temperature that will result in a significant reduction in corrosion resistance properties of the sheath material.

In an embodiment of an insulated conductor heater 562, the conductor 575 may be designed to reach temperatures within a range between about 650 °C to about 870 °C, and the sheath 577 may be designed to reach temperatures within a range between about 535 °C to about 760 °C. In an embodiment of an insulated conductor heater 562, the conductor 575 may be designed to operate at about 760 °C, the sheath 577 may be designed to operate at about 650 °C, and the insulated conductor heater may be designed to dissipate about 820 watts/meter.

An insulated conductor heater 562 may have one or more conductors 575. For example, a single insulated conductor heater may have three conductors within electrical insulation that are surrounded by a sheath. FIG. 1 depicts an insulated conductor heater 562 having a single conductor 575. The conductor may be made of metal. The material used to form a conductor may be, but is not limited to, nichrome, nickel, and a number of alloys made from copper and nickel in increasing nickel concentrations from pure copper to Alloy 30, Alloy 60, Alloy 180 and Monel. Alloys of copper and nickel may advantageously have lower temperature resistivity coefficients than copper or nickel.

The conductor 575 may be chosen to have a diameter and a resistivity at operating temperatures such that its resistance, as derived from Ohm's law, makes it electrically and structurally stable for the chosen power dissipation per meter, the length of the heater, and/or the maximum voltage allowed to pass through the conductor. In an alternate embodiment, the conductor may be designed, using Maxwell's equations, to make use of skin effect heating in and/or on the conductor.

The conductor(s) 575 may be made of different material along a length of the insulated conductor heater. For example, a first section of the conductor may be made of a material that has a significantly lower resistance than a second section of the conductor. The first section may be placed adjacent to a formation layer that does not need to be heated to as high a temperature as a second formation layer that is adjacent to the second section. The resistivity of various sections of conductor may be adjusted by having a variable diameter and/or by having conductor sections made of different materials.

A diameter of a conductor 575 may typically be between about 1.3 mm to about 10.2 mm. Smaller or larger diameters may also be used to have conductors with desired resistivity characteristics. In an embodiment of an insulated conductor heater, the conductor is made of Alloy 60 that has a diameter of about 5.8 mm.

A short flexible transition conductor (not shown) may be connected to a lead-in conductor 572 using a connection made during heater installation in the field. The transition conductor may, for example, be a flexible, low resistivity, stranded copper cable that is surrounded by rubber or polymer insulation. The transition conductor may typically be between about 1.5 m to about 3 m, although longer or shorter transition conductors may be used to accommodate particular needs. Temperature resistant cable may be used as transition conductor. The transition conductor may also be connected to a short length of an insulated conductor heater that is less resistive than a primary heating section of the insulated conductor heater. The less resistive portion of the insulated conductor heater may be referred to as a "cold pin" 568.

The cold pin 568 may be designed to dissipate about one tenth to about one fifth of the power per unit length as is dissipated in a unit length of the primary heating section. Cold pins may typically be between about 1.5 m to about 15 m, although shorter or longer lengths may be used to accommodate specific application needs. In an embodiment, the conductor of a cold pin section is copper with a diameter of about 6.9 mm and a length of 9.1 m. The electrical insulation is the same type of insulation used in the primary heating section. A sheath of the cold pin may be made of Inconel 600. Chloride corrosion cracking in the cold pin region may occur, so a chloride corrosion resistant metal such as Inconel 600 may be used as the sheath.

As illustrated in FIG. 2A, a small, epoxy filled canister 573 may be used to create a connection between a transition conductor 571 and a cold pin 568. Cold pins 568 may be connected to the primary heating sections of insulated conductor 562 heaters by "splices" 567. The length of the cold pin 568 may be sufficient to significantly reduce a temperature of the insulated conductor heater 562. The heater section of the insulated conductor heater 562 may operate from about 530 °C to about 760 °C, the splice 567 may be at a temperature from about 260 °C to about 370 °C, and the temperature at the lead-in cable connection to the cold pin may be from about 40 °C to about 90 °C. In addition to a cold pin at a top end of the insulated conductor heater, a cold pin may also be placed at a bottom end of the insulated conductor heater. The cold pin at the bottom end may in many instances make a bottom termination easier to manufacture.

Splice material may have to withstand a temperature equal to half of a target zone operating temperature. Density of electrical insulation in the splice should in many instances be high enough to withstand the required temperature and the operating voltage.

A splice may be required to withstand 1000 VAC at 480 °C. Splice material may be high temperature splices made by Idaho Laboratories Corporation or by Pyrotenax Cable Company. A splice may be an internal type of splice or an external splice. An internal splice is typically made without welds on the sheath of the insulated conductor heater. The lack of weld on the sheath may avoid potential weak spots (mechanical and/or electrical) on the insulated cable heater. An external splice is a weld made to couple sheaths of two insulated conductor heaters together. An external splice may need to be leak tested prior to insertion of the insulated cable heater into a formation. Laser welds or orbital TIG (tungsten inert gas) welds may be used to form external splices. An additional strain relief assembly may be placed around an external splice to improve the splice's resistance to bending and to protect the external splice against partial or total parting.

The insulated conductor assembly 562 may include heating sections, cold pins, splices, and termination canisters and flexible transition conductors. The insulated conductor assembly may need to be examined and electrically tested before installation of the assembly into an opening in a formation. The assembly may need to be examined for competent welds and to make sure that there are no holes in the sheath anywhere along the whole heater (including the heated section, the cold-pins, the splices and the termination cans). Periodic X-ray spot checking of the commercial product may need to be made. The whole cable may be immersed in water prior to electrical testing. Electrical testing of the assembly may need to show more than 2000 Megaohms at 500 VAC at room temperature after water immersion. In addition, the assembly at room temperature may need to be tested 1000 VAC and show less than about 10 microamperes per meter of resistive leakage current at room temperature. Also, a check on leakage current at about 760 °C may need to show less than about 0.4 milliamps per meter.

There are a number of companies that manufacture insulated conductor heaters. Such manufacturers include, but are not limited to, MI Cable Technologies (Calgary, Alberta), Pyrotenax Cable Company (Trenton, Ontario), Idaho Laboratories Corporation (Idaho Falls, Idaho), and Watlow (St. Louis, MO). As an example, an insulated conductor heater may be ordered from Idaho Laboratories as cable model 355-A90-310-"H" 30'/750'/30' with Inconel 600 sheath for the cold-pins, three phase Y configuration and bottom jointed conductors. The required specification for the heater should also include 1000 VAC, 765 °C (1400 °F) quality cable in addition to the preferred mode specifications described above. The designator 355 specifies the cable OD (0.355"), A90 specifies the conductor material, 310 specifies the heated zone sheath alloy (SS 310), "H" specifies the MgO mix, 30'/750'/30' specifies about a 230 m heated zone with cold-pins top and bottom having about 9 m lengths. A similar part number with the same specification using high temperature Standard purity MgO cable may be ordered from Pyrotenax Cable Company.

One or more insulated conductor heaters may be placed within an opening in a formation to form a heat source or heat sources. Electrical current may be passed through each insulated conductor heater in the opening to heat the formation. Alternately, electrical current may be passed through selected insulated conductor heaters in an opening. The unused conductors may be backup heaters. Insulated conductor heaters may be electrically coupled to a power source in any convenient manner. Each end of an insulated conductor heater may be coupled to lead-in cables that pass through a wellhead. Such a configuration typically has a 180° bend (a "hairpin" bend) or turn located near a bottom of the heat source. An insulated conductor heater that includes a 180° bend or turn may not require a bottom termination, but the 180° bend or turn may be an electrical and/or structural weakness in the heater. Insulated conductor heaters may be electrically coupled together in series, in parallel, or in series and parallel combinations. In some embodiments of heat sources, electrical current may pass into the conductor of an insulated conductor heater and may returned through the sheath of the insulated conductor heater by connecting the conductor 575 to the sheath 577 at the bottom of the heat source.

In an embodiment of the heater assembly depicted in FIG. 2, three insulated conductor heaters 562 are electrically coupled in a 3-phase Y configuration to a power supply. The power supply may provide a 60 cycle AC current to the electrical conductors. No bottom connection may be required for the insulated conductor heaters. Alternately, all three conductors of the three phase circuit may be connected together near the bottom of a heat source opening. The connection may be made directly at ends of heating sections of the insulated conductor heaters or at ends of cold pins coupled to the heating sections at the bottom of the insulated conductor heaters. The bottom connections may be made with MgO filled and sealed canisters or with epoxy filled canisters. The MgO may be the same composition as the MgO used as the electrical insulation.

The three insulated conductor heaters depicted in FIG. 2 may be coupled to support member 564 using centralizers 566. Alternatively, the three insulated conductor heaters may be strapped directly to the support tube using metal straps. Centralizers 566 may be configured to maintain a location of insulated conductor heaters 562 on support member 564. Centralizers 566 may be made of, for example, metal, ceramic or a combination thereof. The metal may be stainless steel or any other type of metal able to withstand a corrosive and hot environment. In some embodiments, centralizers 566 may be simple bowed metal strips welded to the support member at distances less than about 6 meters. A ceramic used in centralizer 566 may be, but is not limited to, Al₂O₃, MgO or other insulator. Centralizers 566 may be configured to maintain a location of insulated conductor heaters 562 on support member 564 such that movement of insulated conductor heaters may be substantially inhibited at operating temperatures of the insulated conductor heaters. Insulated conductor heaters 562 may also be somewhat flexible to withstand expansion of support member 564 during heating. Centralizers 566 may also be configured as described in any of the embodiments herein.

Support member 564, insulated conductor heater 562, and centralizers 566 may be placed in opening 514 in hydrocarbon containing formation 516. Insulated conductor heaters 562 may be coupled to bottom conductor junction 570 using cold pin transition conductor 568. Bottom conductor junction 570 may electrically couple each insulated conductor heater 562 to each other. Bottom conductor junction 570 may include materials that are electrically conducting and do not melt at temperatures found in opening 514. Cold pin transition conductor 568 may be an insulated conductor heater having lower electrical resistance than insulated conductor heater 562. As illustrated in FIG. 2a, cold pin 568 may be coupled to transition conductor 571 and insulated conductor heater 562. Cold pin transition conductor 568 may provide a temperature transition between transition conductor 571 and insulated conductor heater 562.

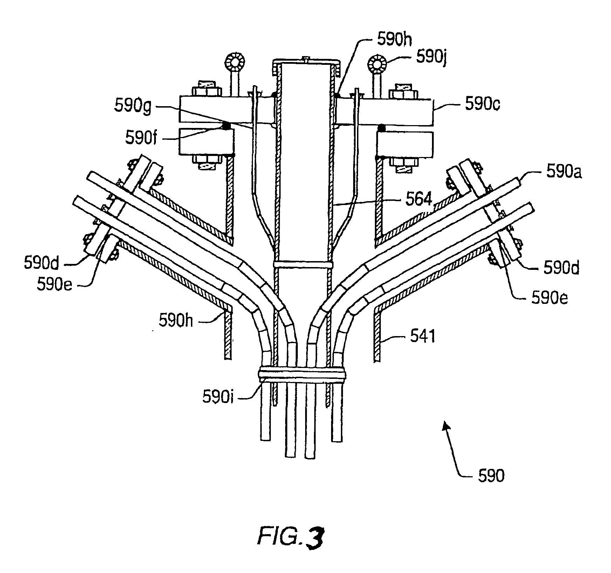

Lead-in conductor 572 may be coupled to wellhead 590 to provide electrical power to insulated conductor heater 562. Wellhead 590 may be configured as shown in FIG. 3 and as described in any of the embodiments herein. Lead-in conductor 572 may be made of a relatively low electrical resistance conductor such that relatively little and/or substantially no heat may be generated from electrical current passing through lead-in conductor 572. For example, the lead-in conductor may include, but may not be limited to, a rubber insulated stranded copper wire but it may also be a mineral-insulated conductor with a copper core. Lead-in conductor 572 may couple to a wellhead 590 at surface 550 through a sealing flange located between overburden 540 and surface 550. The sealing flange 590c may be configured as shown in FIG. 3 and as described in any of the embodiments herein. The sealing flange may substantially inhibit fluid from escaping from opening 514 to surface 550.

Packing material 542 (see FIG. 2) may optionally be placed between overburden casing 541 and opening 514. Overburden casing 541 may include any materials configured to substantially contain cement 544. In an embodiment of a heater source, overburden casing includes an about 7.6 cm diameter carbon steel, schedule 40 casing. Packing material 542 may be configured to substantially inhibit fluid from flowing from opening 514 to surface 550. Overburden casing 541 may be placed in cement 544 in overburden 540 of formation 516. Cement 544 may include, for example, Class G or Class H Portland cement mixed with silica flour for improved high temperature performance, slag or silica flour, or a mixture thereof (e.g., about 1.58 grams per cubic centimetre slag/silica flour). In selected heat source embodiments, cement 544 extends radially a width of from about 5 cm to about 25 cm. In some embodiments cement 544 may extend radially a width of about 10 cm to about 15 cm. In some other embodiments, cement 544 may be designed to inhibit heat transfer from conductor 564 into formation 540 within the overburden.

In FIG. 2, for example, conduit 564 may be provided with a series of orifices (not shown) to add gas from a gas source into the annular space 514.The gas injected through these orifices may flush hydrocarbons from the outer surfaces of the mineral insulated cables 562. The gas may comprise an oxidant, such as air, to burn away any hydrocarbon deposits from the outer surfaces of the mineral insulated cables 562. The gas may be vented to surface via an opening in the packer 542 and the interior of the cased upper part 541 of the heater well. The fluid pressure in the annular space 514 may be monitored by a pressure gauge and controlled such that at least a substantial part of the injected gases and/or combustion gases are vented to the earth surface via the interior of the heater well and transfer of combustion gases into the surrounding formation 514 is inhibited. The fluid pressure in the annular space 514 is preferably also controlled in conjunction with an assessed temperature in the formation 516, such that transfer of pyrolysed hydrocarbons from the formation 516 into the annular space 514 is inhibited.

In certain embodiments one or more conduits may be provided to supply additional components (e.g., nitrogen, carbon dioxide, reducing agents such as gas containing hydrogen, etc.) to formation openings, to bleed off fluids, and/or to control pressure. Formation pressures tend to be highest near heating sources and thus it is often beneficial to have pressure control equipment proximate the heating source. In some embodiments adding a reducing agent proximate the heating source assists in providing a more favourable pyrolysis environment (e.g., a higher hydrogen partial pressure). Since permeability and porosity tend to increase more quickly proximate the heating source, it is often optimal to add a reducing agent proximate the heating source so that the reducing agent can more easily move into the formation.

In FIG. 2 conduit 500 injects gas from gas source 503, through valve 501, and into opening 514 (an opening 504 is provided in packing material 542 to allow gas to be injected into and/or vented from opening 514). Conduit 500 and valve 502 may also be used at different times to bleed off pressure and/or control pressure proximate to opening 514. Valves 501 and 503 may also be used at different times to increase and/or bleed off pressure in the uncased lower part 514 of the heater well.

The heater support conduit 564 may be provided with a series of orifices (not shown) to add gas from a gas source into the annular space 514.The gas injected through these orifices may flush hydrocarbons from the outer surfaces of the mineral insulated cables 562. The gas may comprise an oxidant, such as air, to burn away any hydrocarbon deposits from the outer surfaces of the mineral insulated cables 562. The gas may be vented to surface via an opening in the packer 542 and the interior of the cased upper part 541 of the heater well. The fluid pressure in the annular space 514 may be monitored by a pressure gauge and controlled such that at least a substantial part of the injected gases and/or combustion gases are vented to the earth surface via the interior of the heater well and transfer of combustion gases into the surrounding formation 514 is inhibited. The fluid pressure in the annular space 514 is preferably also controlled in conjunction with an assessed temperature in the formation 516, such that transfer of pyrolysed hydrocarbons from the formation 516 into the annular space 514 is inhibited.

The heater support member 564 and lead-in conductor 572 may be coupled to wellhead 590 at surface 550 of formation 516. Surface conductor 545 may enclose cement 544 and may couple to wellhead 590. Embodiments of heater source surface conductor 545 may have a diameter of about 10.16 cm to about 30.48 cm or, for example, a diameter of about 22 cm. Embodiments of surface casings may extend to depths of approximately 3m to approximately 515 m into an opening in the formation. Alternatively, the surface casing may extend to a depth of approximately 9 m into the opening. Electrical current may be supplied from a power source to insulated conductor heater 562 to generate heat due to the electrical resistance of conductor 575 as illustrated in FIG. 16. As an example, a voltage of about 330 volts and a current of about 266 amps are supplied to insulated conductors 562 to generate a total of about 1150 watts/meter of insulated conductor heater 562. Heat generated from the three insulated conductor heaters 562 may transfer (e.g., by radiation) within opening 514 to heat at least a portion of the formation 516.

An appropriate configuration of the mineral insulated conductor heater may be determined by optimizing a material cost of the heater based on a length of heater, a power required per meter of conductor, and a desired operating voltage. In addition, an operating current and voltage may be chosen to optimize the cost of input electrical energy in conjunction with a material cost of the insulated conductor heaters. For example, as input electrical energy increases, the cost of materials needed to withstand the higher voltage may also increase. The insulated conductor heaters may be configured to generate a radiant heat of approximately 650 watts/meter of conductor to approximately 1650 watts/meter of conductor. The insulated conductor heater may operate at a temperature between approximately 530 °C and approximately 760 °C within a formation.

Heat generated by the mineral insulated conductor heater may heat at least a portion of a hydrocarbon containing formation. In some embodiments heat may be transferred to the formation substantially by radiation of the generated heat to the formation. A small amount of heat may be transferred by conduction or convection of heat due to gases present in the opening. The opening may be an uncased opening. An uncased opening eliminates cost associated with thermally cementing the heater to the formation, costs associated with a casing, and/or costs of packing a heater within an opening. In addition, the heat transfer by radiation is generally more efficient than by conduction so the heaters will operate at lower temperatures in an open wellbore. The conductive heat transfer may be enhanced by the addition of a gas in the opening at pressures up to about 27 bar absolute. The gas may include, but may not be limited to, carbon dioxide and/or helium. Still another advantage is that the heating assembly will be free to undergo thermal expansion. Yet another advantage is that the heaters may be replaceable.

The insulated conductor heater, as described in any of the embodiments herein, may be installed in the heater well or other opening 514 by any method known in the art. In an embodiment, more than one spooling assembly may be used to install both the electric heater and a support member simultaneously. U.S. Patent No. 4,572,299 issued to Van Egmond et al. describes spooling an electric heater into a well. Alternatively, the support member may be installed using a coiled tubing unit including any unit known in the art. The heaters may be un-spooled and connected to the support as the support is inserted into the well. The electric heater and the support member may be un-spooled from the spooling assemblies. Spacers may be coupled to the support member and the heater along a length of the support member. Additional spooling assemblies may be used for additional electric heater elements.

In an embodiment, the support member may be installed using standard oil field operations and welding different sections of support. Welding may be done by using orbital welding. For example, a first section of the support member may be disposed into the well. A second section (e.g., of substantially similar length) may be coupled to the first section in the well. The second section may be coupled by welding the second section to the first section. An orbital welder disposed at the wellhead may be configured to weld the second section to the first section. This process may be repeated with subsequent sections coupled to previous sections until a support of desired length may be disposed in the well.

FIG. 3 illustrates a cross-sectional view of one embodiment of a wellhead coupled, e.g., to overburden casing 541. Flange 590c may be coupled to, and/or a part of, wellhead 590. Flange 590c may be, for example, carbon steel, stainless steel or any other commercially available suitable sealing material. Flange 590c may be sealed with o-ring 590f, or any other sealing mechanism. Thermocouples 590g may be provided into wellhead 590 through flange 590c. Thermocouples 590g may measure a temperature on or proximate to support member 564 within the heated portion of the well. Support member 564 may be coupled to flange 590c. Support member 564 may be configured to support one or more insulated conductor heaters as described herein. Support member 564 may be sealed in flange 590c by welds 590h. Alternately, support member 564 may be sealed by any method known in the art.

Power conductor 590a may be coupled to a lead-in cable and/or an insulated conductor heater. Power conductor 590a may be configured to provide electrical energy to the insulated conductor heater. Power conductor 590a may be sealed in sealing flange 590d. Sealing flange 590d may be sealed by compression seals or o-rings 590e. Power conductor 590a may be coupled to support member 564 with band 590i. Band 590i may include a rigid and corrosion resistant material such as stainless steel. Wellhead 590 may be sealed with weld 590h such that fluid may be substantially inhibited from escaping the formation through wellhead 590. Lift bolt 590j may be configured to lift wellhead 590 and support member 564. Wellhead 590 may also include a pressure control valve. Compression fittings 590k may serve to seal power cable 590a and compression fittings 5901 may serve to seal thermocouple 590g. These seals inhibit fluids from escaping the formation. The pressure control valve may be configured to control a pressure within an opening in which support member 564 may be disposed.

In an embodiment, a control system may be configured to control electrical power supplied to an insulated conductor heater. Power supplied to the insulated conductor heater may be controlled with any appropriate type of controller. For alternating current, the controller may, for example, be a tapped transformer. Alternatively, the controller may be a zero crossover electrical heater firing SCR (silicon controlled rectifier) controller. Zero crossover electrical heater firing control may be achieved by allowing full supply voltage to the insulated conductor heater to pass through the insulated conductor heater for a specific number of cycles, starting at the "crossover," where an instantaneous voltage may be zero, continuing for a specific number of complete cycles, and discontinuing when the instantaneous voltage again may cross zero. A specific number of cycles may be blocked, allowing control of the heat output by the insulated conductor heater. For example, the control system may be arranged to block fifteen and/or twenty cycles out of each sixty cycles that may be supplied by a standard 60 Hz alternating current power supply. Zero crossover firing control may be advantageously used with materials having a low temperature coefficient materials. Zero crossover firing control may substantially inhibit current spikes from occurring in an insulated conductor heater.

In some embodiments, the cross sectional area and/or the metal used for a particular section may be chosen so that a particular section provides greater (or lesser) heat dissipation per unit length than an adjacent section. More heat dissipation per unit length may be provided near an interface between a hydrocarbon layer and a non-hydrocarbon layer (e.g., the overburden and the hydrocarbon containing formation) to counteract end effects and allow for more uniform heat dissipation into the hydrocarbon containing formation. A higher heat dissipation may also be located at a lower end of an elongated member to counteract end effects and allow for more uniform heat dissipation.

In some embodiments, an electric heater may be configured to provide heat in addition to heat provided from a surface combustor. The electric heater may be configured to provide the additional heat to a hydrocarbon containing formation such that the hydrocarbon containing formation may be heated substantially uniformly along a selected interval of a heater well which traverses a hydrocarbon containing formation in which hydrocarbons are pyrolysed and induced to flow to a number of hydrocarbon fluid production wells.

## Claims

1. A system configured to heat an underground hydrocarbon containing formation (516) to pyrolyse hydrocarbons within the formation, comprising:
an electrical conductor (575) configured to be disposed within a heater well (514) traversing the formation (516) to provide radiant heat to at least a portion of the formation (516) during use, wherein the electrical conductor (575) is at least partly surrounded by an electrical insulation layer (576) which comprises an insulating mineral material comprising mineral grain particles and which layer (576) is disposed in a sheath (577) which comprises a corrosion-resistant material, **characterised in that** the electrical conductor (575) is disposed within an at least partly uncased fluid filled section of the heater well, and that the insulating mineral material further comprises a selected amount of impurities, which impurities comprise grain particles having smaller sizes than the mineral grain particles.

2. The system of claim 1, wherein the electrical conductor (575) comprises a copper-nickel alloy and is configured as a substantially flexible cable.

3. The system of claim 1 or 2, further comprising a support member (564), which is configured to support the mineral insulated electrical conductor (575).

4. The system of claim 3, further comprising a support member (564) and a centralizer (566), wherein the support member (564) is configured to support the mineral insulated electrical conductor (575), and wherein the centralizer (566) is configured to maintain a location of the mineral insulated conductor (562) on the support member (564).

5. The system of claim 1, wherein the mineral insulated electrical conductor (575) is configured to generate in use a controlled amount of radiant heat to heat the formation (516) surrounding the well (514).

6. The system of claim 5, wherein the mineral insulated electrical conductor (575) is configured to generate during use between 0.5 and 2 KW radiant heat per meter length of the mineral insulated electrical conductor (575).

7. An in situ method for heating a carbon containing formation (516) to pyrolyse hydrocarbons within the formation, comprising:
applying an electrical current to a mineral insulated electrical conductor (575), which conductor (575) is at least partly surrounded by an electrical insulating layer (576) comprising an insulated mineral material comprising mineral grain particles, which layer (576) is disposed in a sheath (516) which comprises a corrosion resistant material, to provide radiant heat to at least a portion of the formation (576), and
allowing the radiant heat to transfer from the mineral insulated conductor (575) to a section of the formation (516); **characterised in that** the mineral insulated conductor (575) is disposed within an at least partly uncased fluid filled section of a heater well (514) traversing the formation (516), and that the insulating mineral material further comprises a selected amount of impurities, which impurities comprise grain particles having smaller sizes than the mineral grain particles.

8. The method of claim 7, further comprising supporting the mineral insulated conductor (575) on a support member (564) which is suspended within the heater well.

9. The method of claim 8, further comprising supporting the mineral insulated conductor (575) on the support member (564) with a number of centralizers (566).

10. The method of claim 7, wherein the mineral insulated conductor (575) is configured as a substantially flexible cable which comprises a copper-nickel alloy.

11. The method of claim 7, wherein the mineral insulated conductor (575) is disposed in a tubular layer of insulating mineral material (576), and wherein the insulating mineral material comprises magnesium oxide grain particles.

12. The method of claim 7, further comprising heating at least a portion of the formation (516) surrounding the heater well to substantially pyrolyze hydrocarbons within said portion of the formation (516) surrounding the heater well (514).

13. The method of claim 12, comprising transmitting between 0.5 and 1.5 KW radiant heat per meter length of the mineral insulated conductor (575) into a portion of the hydrocarbon containing formation (516) surrounding the heater well (514).

14. The method of any one of claims 7-13, wherein the fluid pressure in the heater well (514) is controlled by a pressure control assembly.

15. A method of producing pyrolysed hydrocarbons, wherein hydrocarbons are heated and pyrolysed by the method according to any one of claims 7-14 and induced to flow to a number of hydrocarbon fluid production wells.

## Patentansprüche

1. System, das ausgebildet ist, um eine unterirdische Kohlenwasserstoff enthaltende Formation (516) zu erhitzen und Kohlenwasserstoffe innerhalb der Formation zu pyrolysieren, und das umfasst:
einen elektrischen Leiter (575), der ausgebildet ist, um innerhalb eines Heizschachts (514) angeordnet zu werden, der die Formation (516) durchläuft, um während des Betriebes Strahlungswärme an zumindest einen Teil der Formation (516) zu liefern, wobei der elektrische Leiter (575) zumindest teilweise von einer elektrisch isolierenden Schicht (576) umgeben ist, die ein isolierendes Mineralmaterial mit Mineralkornpartikeln umfasst, und wobei die Schicht (576) in einem Mantel (577) angeordnet ist, der ein korrosionsbeständiges Material umfasst, **dadurch gekennzeichnet, dass** der elektrische Leiter (575) innerhalb eines zumindest teilweise nicht ausgekleideten, mit Fluid gefüllten Abschnitts des Heizschachtes angeordnet ist und das isolierende Mineralmaterial ferner eine vorbestimmte Menge von Fremdstoffen umfasst, wobei die Fremdstoffe Kornpartikel aufweisen, die kleinere Größen als die Mineralkornpartikel aufweisen.

2. System nach Anspruch 1, wobei der elektrische Leiter (575) eine Kupfer-Nickel-Legierung umfasst und als ein im Wesentlichen biegsames Kabel ausgebildet ist.

3. System nach Anspruch 1 oder 2, ferner umfassend ein Stützelement (564), das derart ausgebildet ist, dass es den mineralisolierten elektrischen Leiter (575) stützt.

4. System nach Anspruch 3, ferner umfassend ein Stützelement (564) und einen Zentralisierer (566), wobei das Stützelement (564) derart ausgebildet ist, dass es den mineralisolierten elektrischen Leiter (575) stützt, und wobei der Zentralisierer (566) derart ausgebildet ist, dass er eine Position des mineralisolierten Leiters (562) an dem Stützelement (564) bewahrt.

5. System nach Anspruch 1, wobei der mineralisolierte elektrische Leiter (575) derart ausgebildet ist, dass er in Betrieb eine gesteuerte Menge von Strahlungswärme erzeugt, um die Formation (516), die den Schacht (514) umgibt, zu erhitzen.

6. System nach Anspruch 5, wobei der mineralisolierte elektrische Leiter (575) derart ausgebildet ist, dass er während des Betriebes zwischen 0,5 und 2 kW Strahlungswärme je Meter Länge des mineralisolierten elektrischen Leiters (575) erzeugt.

7. In situ Verfahren zum Erhitzen einer Kohlenstoff enthaltenden Formation (516), um Kohlenwasserstoffe innerhalb der Formation zu pyrolysieren, umfassend die Schritte:
Anlegen eines elektrischen Stroms an einen mineralisolierten elektrischen Leiter (575), wobei der Leiter (575) zumindest teilweise von einer elektrisch isolierenden Schicht (576) umgeben ist, die ein isolierendes Mineralmaterial mit Mineralkornpartikeln umfasst, und wobei die Schicht (576) in einem Mantel (577) angeordnet ist, der ein korrosionsbeständiges Material umfasst, um Strahlungswärme an zumindest einen Teil der Formation (516) zu liefern, und
Zulassen, dass die Strahlungswärme von dem mineralisolierten Leiter (575) zu einem Abschnitt der Formation (516) übertragen wird; **dadurch gekennzeichnet, dass** der mineralisolierte Leiter (575) innerhalb eines zumindest teilweise nicht ausgekleideten, mit Fluid gefüllten Abschnitts eines Heizschachtes (514), der die Formation (516) durchläuft, angeordnet ist und das isolierende Mineralmaterial ferner eine vorbestimmte Menge von Fremdstoffen umfasst, wobei die Fremdstoffe Kornpartikel aufweisen, die kleinere Größen als die Mineralkornpartikel aufweisen.

8. Verfahren nach Anspruch 7, ferner umfassend den Schritt:
Stützen des mineralisolierten Leiter (575) an einem Stützelement (564), das innerhalb des Heizschachts aufgehängt ist.

9. Verfahren nach Anspruch 8, ferner umfassend den Schritt:
Stützen des mineralisolierten Leiters (575) an dem Stützelement (564) mit einer Anzahl von Zentralisierern (566).

10. Verfahren nach Anspruch 7, wobei der mineralisolierte Leiter (575) als ein im Wesentlichen biegsames Kabel mit einer Kupfer-Nickel-Legierung ausgebildet ist.

11. Verfahren nach Anspruch 7, wobei der mineralisolierte Leiter (575) in einer rohrförmigen Schicht aus isolierendem Mineralmaterial (576) angeordnet ist und wobei das isolierende Mineralmaterial Magnesiumoxid-Kornpartikel umfasst.

12. Verfahren nach Anspruch 7, ferner umfassend den Schritt:
Erhitzen zumindest eines Teils der Formation (516), die den Heizschacht umgibt, um Kohlenwasserstoffe innerhalb des Teils der Formation (516), die den Heizschacht (514) umgibt, im Wesentlichen zu pyrolysieren.

13. Verfahren nach Anspruch 12, umfassend den Schritt: Übertragen von zwischen 0,5 und 1,5 kW Strahlungswärme je Meter Länge des mineralisolierten Leiters (575) in einen Teil der Kohlenwasserstoff enthaltenden Formation (516), die den Heizschacht (514) umgibt.

14. Verfahren nach einem der Ansprüche 7 bis 13, wobei der Fluiddruck in dem Heizschacht (514) durch eine Drucksteuerungsanordnung gesteuert wird.

15. Verfahren zur Förderung von pyrolysierten Kohlenwasserstoffen, wobei Kohlenwasserstoffe durch das Verfahren nach einem der Ansprüche 7 bis 14 erhitzt und pyrolysiert werden, und dazu gebracht werden, in eine Anzahl von Kohlenwasserstofffluid-Förderschächten zu strömen.

## Revendications

1. Système configuré pour chauffer une formation souterraine (516) contenant des hydrocarbures pour pyrolyser les hydrocarbures au sein de la formation, comprenant :
un conducteur électrique (575) configuré pour être disposé dans un puits de chauffage (514) traversant la formation (516) pour fournir de la chaleur rayonnante à au moins une partie de la formation (516) en cours d'utilisation, dans lequel le conducteur électrique (575) est au moins en partie entouré par une couche isolante électrique (576), qui comprend un matériau minéral isolant comprenant des particules granulaires minérales et laquelle couche (576) est disposée dans une gaine (577) qui comprend un matériau résistant à la corrosion, **caractérisé en ce que** le conducteur électrique (575) est disposé dans une section remplie de fluide au moins en partie non cuvelée du puits de chauffage et **en ce que** le matériau minéral isolant comprend en outre une quantité choisie d'impuretés, lesquelles impuretés comprennent des particules granulaires ayant des tailles plus petites que celles des particules granulaires minérales.

2. Système selon la revendication 1, dans lequel le conducteur électrique (575) comprend un alliage de cuivre-nickel et est configuré sous la forme d'un câble sensiblement flexible.

3. Système selon la revendication 1 ou 2, comprenant en outre un élément de support (564) qui est configuré pour supporter le conducteur électrique minéral isolé (575).

4. Système selon la revendication 3, comprenant en outre un élément de support (564) et un centreur (566), dans lequel l'élément de support (564) est configuré pour supporter le conducteur électrique minéral isolé (575), et dans lequel le centreur (566) est configuré pour maintenir un emplacement du conducteur minéral isolé (562) sur l'élément de support (564).

5. Système selon la revendication 1, dans lequel le conducteur électrique isolé minéral (575) est configuré pour générer en usage une quantité réglée de chaleur rayonnante pour chauffer la formation (516) entourant le puits (514).

6. Système selon la revendication 5, dans lequel le conducteur électrique minéral isolé (575) est configuré pour générer en cours d'utilisation 0,5 à 2 kW de chaleur rayonnante par mètre de longueur du conducteur électrique isolé minéral (575).

7. Procédé in situ pour chauffer une formation (516) contenant du carbone pour pyrolyser des hydrocarbures dans la formation, comprenant les étapes suivantes :
on applique un courant électrique à un conducteur électrique minéral isolé (575), lequel conducteur (575) est au moins en partie entouré par une couche isolante électrique (576) comprenant un matériau minéral isolé comprenant des particules granulaires minérales, laquelle couche (576) est disposée dans une gaine (516) qui comprend un matériau résistant à la corrosion, pour fournir de la chaleur rayonnante à au moins une partie de la formation (576), et
on laisse la chaleur rayonnante se transférer du conducteur minéral isolé (575) à une section de la formation (516); **caractérisé en ce que** le conducteur minéral isolé (575) est disposé dans une section remplie de fluide au moins en partie non cuvelée d'un puits de chauffage (514) traversant la formation (516), et le matériau minéral isolant comprend en outre une quantité choisie d'impuretés, lesquelles impuretés comprennent des particules granulaires ayant des tailles plus petites que celles des particules granulaires minérales.

8. Procédé selon la revendication 7, comprenant en outre le support du conducteur minéral isolé (575) sur un élément de support (564) qui est suspendu dans le puits de chauffage.

9. Procédé selon la revendication 8, comprenant en outre le support du conducteur minéral isolé (575) sur l'élément de support (564) avec un certain nombre de centreurs (566).

10. Procédé selon la revendication 7, dans lequel le conducteur minéral isolé (575) est configuré sous la forme d'un câble sensiblement flexible qui comprend un alliage de cuivre-nickel.

11. Procédé selon la revendication 7, dans lequel le conducteur minéral isolé (575) est disposé dans une couche tubulaire de matériau minéral isolant (576) et dans lequel le matériau minéral isolant comprend des particules granulaires d'oxyde de magnésium.

12. Procédé selon la revendication 7, comprenant en outre le chauffage d'au moins une partie de la formation (516) entourant le puits de chauffage pour pyrolyser sensiblement les hydrocarbures dans ladite partie de la formation (516) entourant le puits de chauffage (514).

13. Procédé selon la revendication 12, comprenant la transmission de 0,5 à 1,5 kW de chaleur rayonnante par mètre de longueur du conducteur minéral isolé (575) dans une partie de la formation (516) contenant des hydrocarbures entourant le puits de chauffage (514).

14. Procédé selon l'une quelconque des revendications 7 à 13, dans lequel la pression du fluide dans le puits de chauffage (514) est réglée par un assemblage de réglage de pression.

15. Procédé de production d'hydrocarbures pyrolysés, dans lequel les hydrocarbures sont chauffés et pyrolysés par le procédé selon l'une quelconque des revendications 7 à 14 et induits pour s'écouler vers un certain nombre de puits de production de fluides hydrocarbonés.
